# EUROPEAN PATENT APPLICATION

(11) **EP 4 011 981 A1**
(43) Date of publication of application: **15.06.2022**
(21) Application number: 20849301.5
(22) Date of filing: 06.08.2020
(51) Int. Cl.: C08L 101/00, C08K 7/14, C08L 51/04, C08L 61/06, C23C 18/32

(54) **THERMOSETTING RESIN COMPOSITION**

(30) Priority: 08.08.2019 JP 2019146703
(71) Applicant: Sumitomo Bakelite Co.Ltd., Shinagawa-ku Tokyo 140-0002 (JP)
(72) Inventor: OCHIAI, Yuki, Tokyo 140-0002 (JP); MOCHIZUKI, Shunsuke, Tokyo 140-0002 (JP)
(74) Representative: Ter Meer Steinmeister & Partner
(86) International application number: PCT/JP2020/030222
(87) International publication number: WO 2021/025125

(57) **Abstract**

A thermosetting resin composition used in a resin molded body for which a plating process is applied to a surface includes component (A), which is a thermosetting resin, and component (B), which is core-shell-type elastomer particles.

## Description

### TECHNICAL FIELD

The present invention relates to a thermosetting resin composition.

### BACKGROUND ART

Patent Document 1 (Japanese Unexamined Patent Publication No. 2018-58960) describes a technique which attempts to improve adhesion between a thermosetting resin molded body and a plating film. This document describes a resin composition for sealing containing an epoxy resin, a phenol compound, and an aromatic monocarboxylic acid having a specific electron-withdrawing functional group and that it is possible for a sealing material produced using the above composition to have high adhesion to a plated lead frame at high temperatures.

In addition, Patent Document 2 (Japanese Unexamined Patent Publication No. H5-59587) is another example describing a method for plating plastics. The above document describes mixing calcium carbonate fine particles with a particle diameter of 10 µm or less into resins for which plating is difficult, such as polyethylene resin and polypropylene resin, to carry out molding and then processing the molded product by a normal ABS resin plating step, including a chemical etching process, and that, due to this, it is possible to use the normal ABS resin plating step and equipment as they are to adhere a plating layer to polyethylene resin, polypropylene resin, or the like, for which plating is difficult.

### RELATED DOCUMENT

### PATENT DOCUMENT

[Patent Document 1] Japanese Unexamined Patent Publication No. 2018-58960
[Patent Document 2] Japanese Unexamined Patent Publication No. H5-59587

### SUMMARY OF THE INVENTION

### TECHNICAL PROBLEM

When the present inventors examined the techniques described in the Patent Documents described above, it was clear that there is still room for improvement in terms of improving the adhesion between a resin molded body and a plating film when a plating process is applied to a surface of the resin molded body.

### SOLUTION TO PROBLEM

According to the present invention, there is provided a thermosetting resin composition used in a resin molded body for which a plating process is applied to a surface, the thermosetting resin composition including the following components (A) and (B).
(A) A thermosetting resin
(B) Core-shell-type elastomer particles.

In addition, according to the present invention, there is provided a molded body including a cured product of the thermosetting resin composition of the present invention described above, and a plating layer provided in contact with a surface of the cured product.

### ADVANTAGEOUS EFFECTS OF INVENTION

According to the present invention, it is possible to improve adhesion between a resin molded body and a plating film when a plating process is applied to a surface of the resin molded body.

### BRIEF DESCRIPTION OF THE DRAWINGS

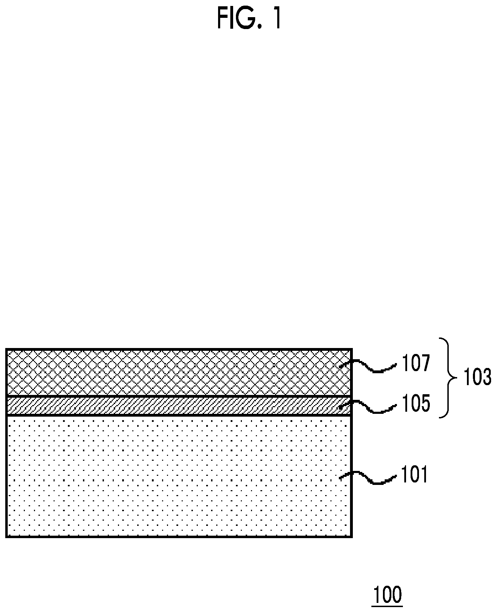

FIG. 1 is a cross-sectional view showing a configuration example of a molded body in an embodiment.

### DESCRIPTION OF EMBODIMENTS

A description will be given below of embodiments of the present invention using drawings. In all drawings, similar components are marked with common reference numerals and explanation thereof will not be repeated as appropriate. Unless otherwise noted, "A to B" in a numerical range represents A or more and B or less and includes the numerical values at both ends. In addition, in the present embodiment, it is possible for the composition to include each component alone or in a combination of two or more.

### (Thermosetting Resin Composition)

The thermosetting resin composition (referred to below simply as "resin composition" as appropriate) is a resin composition which is used for a resin molded body for which a plating process is applied on a surface and which includes the following components (A) and (B) .
(A) A thermosetting resin
(B) Core-shell type elastomer particles

In the present embodiment, the resin composition is specifically a thermosetting resin composition.

A description will be given below of the components of the resin composition with specific examples.

### (Component (A))

Component (A) is a thermosetting resin.

The component (A) may be, for example, any component used as a molding material and specific examples thereof include phenol resins, epoxy resins, urea resins, resins having a triazine ring such as melamine resin, bismaleimide resins, unsaturated polyester resins, polyurethane resins, diallyl phthalate resins, silicone resins, cyanate ester resins, polyimide resins, polyamide-imide resins, benzocyclobutene resins, resins having benzoxazine rings, polyvinyl butyral resins, and polyvinyl acetate resins.

The component (A) more specifically includes one or more selected from epoxy resins and phenol resins, preferably includes phenol resins, and more preferably is a phenol resin, or an epoxy resin and a phenol resin. In addition, the resin composition is preferably a phenol resin composition.

### (Phenol Resins)

Examples of phenol resins include novolac resins, such as phenol novolac resin and cresol novolac resin, which are obtained by condensing or co-condensing phenols, such as phenol, cresol, resorcinol, catechol, bisphenol A, bisphenol F, phenylphenol, aminophenol, α-naphthol, β-naphthol, and dihydroxynaphthalene, with formaldehyde or ketones with an acidic catalyst; phenol aralkyl resins having a phenylene skeleton synthesized from the above phenols and dimethoxyparaxylene or bis(methoxymethyl)biphenyl; phenol aralkyl resins such as phenol aralkyl resins having a biphenylene skeleton; and phenol resins having a triphenylmethane skeleton.

The phenol resin preferably includes one or two or more selected from the group consisting of resol-type phenol resins and novolac-type phenol resins.

From the viewpoint of improving adhesion to the plating film formed on the surface of the resin molded body, the component (A) more preferably includes a resol-type phenol resin and a novolac-type phenol resin, and is more preferably a resol-type phenol resin and a novolac-type phenol resin.

Among the above, including the resol-type phenol resin in the component (A) makes it possible to improve the adhesion to the plating film formed on the surface of the resin molded body, to moderately increase the cross-link density of the resin molded body, to improve the toughness of the resin molded body, and to improve the mechanical strength. In addition, since it is possible to moderately improve the cross-link density in this manner, it is possible to efficiently suppress dimensional changes in the resin molded body due to water and moisture absorption.

It is possible to obtain resol-type phenol resins, for example, by reacting phenols and aldehydes in the presence of a basic catalyst, usually at a molar ratio of aldehydes with respect to phenols (aldehydes/phenols) of 1.3 to 1.7.

Here, examples of the phenols used when manufacturing resol-type phenol resins include one or two or more phenol compounds selected from the group consisting of phenol, o-cresol, m-cresol, p-cresol, xylenol, alkylphenols, catechol, and resorcinol.

In addition, examples of aldehydes used when manufacturing resol-type phenol resins include aldehyde compounds such as formaldehyde, paraformaldehyde, and benzaldehyde, substances which are the sources of these aldehyde compounds, or solutions of these aldehyde compounds.

From the viewpoint of improving the heat resistance of the resin molded body and from the viewpoint of suppressing dimensional changes in the resin molded body due to water and moisture absorption, when the component (A) includes a resol-type phenol resin, the content thereof is more than 0% by mass with respect to the entire component (A) included in the resin composition, preferably 50% by mass or more, more preferably 60% by mass or more, even more preferably 70% by mass or more, and yet more preferably 75% by mass or more.

In addition, from the viewpoint of suppressing dimensional changes in the resin molded body due to heating, the content of the resol-type phenol resin is 100% by mass or less with respect to the entire component (A) included in the resin composition, preferably 95% by mass or less, more preferably 90% by mass or less, even more preferably 85% by mass or less, and yet more preferably 80% by mass or less.

In addition, the component (A) including a novolac-type phenol resin makes it possible to improve the adhesion to the plating film formed on the surface of the resin molded body and to improve the mechanical strength of the resin molded body.

Examples of the novolac-type phenol resin include phenol novolac resin, cresol novolac resin, and bisphenol novolac resin.

From the viewpoint of increasing the adhesion to the plating film formed on the surface of the resin molded body as well as increasing the mechanical strength of the resin molded body, the novolac-type phenol resin preferably includes one or two or more resins selected from the group consisting of the resin represented by General Formula (1) and the resin represented by General Formula (2) .

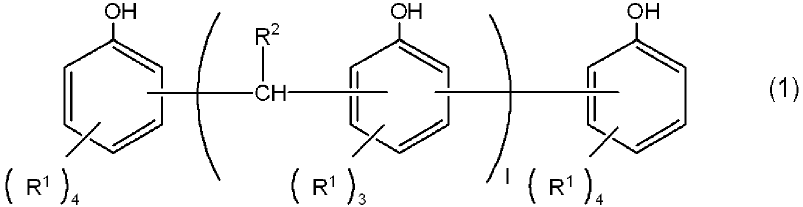

(In General Formula (1), R¹ each independently represents a hydrogen atom, a hydroxyl group, an alkyl group having 1 to 10 carbon atoms, a cycloalkyl group having 1 to 10 carbon atoms, or an aryl group or a substituted aryl group having 6 to 10 carbon atoms, R² each independently represents a hydrogen atom, an alkyl group having 1 to 10 carbon atoms, a cycloalkyl group having 1 to 10 carbon atoms, or an aryl group or substituted aryl group having 6 to 10 carbon atoms, and 1 is a number of 1 or more and 10 or less.)

For example, it is possible to appropriately select the resins shown in General Formula (1) from resins obtained by reacting phenols with aldehydes, for example, without a catalyst or in the presence of an acidic catalyst, in accordance with the application. More specifically, it is possible to use a random novolac-type or high-ortho novolac-type phenol resin as the resin shown in General Formula (1).

Usually, it is possible to obtain this novolac-type phenol resin by carrying out the reaction while controlling the molar ratio (aldehydes/phenols) of the aldehydes with respect to the phenols to be 0.7 to 0.9.

Specific examples of phenols used when preparing the resin shown in General Formula (1) include phenol, o-cresol, m-cresol, p-cresol, xylenol, alkylphenols, catechol, and resorcinol.

In addition, examples of aldehydes used when preparing the resin shown in General Formula (1) include aldehyde compounds such as formaldehyde, paraformaldehyde, and benzaldehyde, substances which are the sources of these aldehyde compounds, or solutions of these aldehyde compounds.

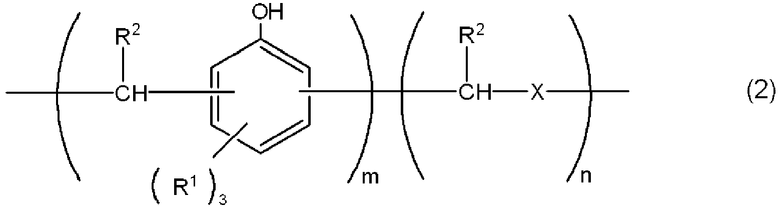

(In General Formula (2), R¹ each independently represents a hydrogen atom, a hydroxyl group, an alkyl group having 1 to 10 carbon atoms, a cycloalkyl group having 1 to 10 carbon atoms, or an aryl group or substituted aryl group having 6 to 10 carbon atoms, R² each independently represents a hydrogen atom, an alkyl group having 1 to 10 carbon atoms, a cycloalkyl group having 1 to 10 carbon atoms, or an aryl group or a substituted aryl group having 6 to 10 carbon atoms, group X is a divalent group selected from the groups represented by General Formulas (3) to (5), m is a number of 1 or more and 10 or less, and n is a number of 1 or more and 10 or less.)

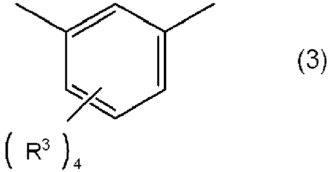

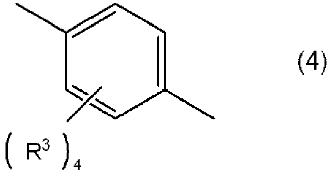

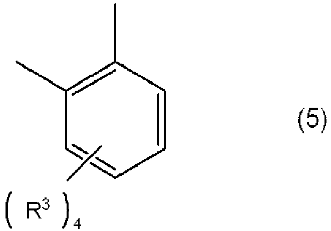

(In General Formulas (3) to (5), R³ are each independently a hydrogen atom, an alkyl group having 1 to 10 carbon atoms, or a cycloalkyl group having 1 to 10 carbon atoms.)

As specific examples of the method for preparing the resin shown in General Formula (2), for the benzene-modified phenol resin corresponding to a case where R³ in General Formula (3) to (5) are all hydrogen atoms, preparation is possible by reacting para-xylene dimethyl ether with phenols in the presence of an acidic catalyst, for example. In addition, in a case of a substituted benzene-modified phenol resin in which R³ in General Formulas (3) to (5) corresponds to an alkyl group with 1 to 10 carbon atoms or a cycloalkyl group with 1 to 10 carbon atoms, preparation is possible by first reacting substituted benzene with aldehydes in the presence of an acidic catalyst and then reacting the obtained polymer with phenols or phenols and aldehydes with an acidic catalyst.

In this manner, it is possible to intercalate a structural unit derived from benzene or substituted benzene in the repeating units of the novolac-type phenol resin.

Although the terminal structural unit is not shown in General Formula (2), such a structural unit may be both a structural unit derived from phenols and a structural unit derived from benzene or substituted benzene.

In addition, the modification ratio of the resin shown in General Formula (2) is defined as the ratio of n with respect to the sum of m and n in General Formula (2), that is, the value of (n/ (m+n)) . It is possible to appropriately adjust this modification ratio according to the usage application or the like; however, from the viewpoint of controlling the cross-link density to be moderate when producing a resin molded body from the resin composition, the modification ratio is, for example, 0.15 or more, and preferably 0.20 or more, and, for example, 0.60 or less, and preferably 0.50 or less.

Specific examples of phenols used when preparing the resin shown in General Formula (2) include phenol, o-cresol, m-cresol, p-cresol, xylenol, alkylphenols, catechol, resorcinol, and the like. These phenols may be used alone or in a mixture of two or more.

As aldehydes used when preparing the resins shown in General Formula (2), for example, it is possible to use aldehyde compounds such as formaldehyde, paraformaldehyde, and benzaldehyde, substances which are sources of these aldehyde compounds, solutions of these aldehyde compounds, and the like. These aldehydes may be used alone or in a mixture of two or more.

In addition, examples of substituted benzene used when preparing the resin shown in General Formula (2) include toluene, xylene, mesitylene, and cyclohexylbenzene.

When preparing the resin shown in General Formula (2), due to a high ease of availability, benzene, or toluene or xylene among the substituted benzenes described above, is employed and, as the phenols, a phenol in which all R¹ groups are hydrogen atoms is employed to prepare a benzene-modified novolac-type phenol resin, a toluene-modified novolac-type phenol resin, or a xylene-modified novolac-type phenol resin and it is preferable to use the above as the resin shown in General Formula (2).

From the viewpoint of making the processability of the resin molded body preferable, when the component (A) includes a novolac-type phenol resin, the content thereof is more than 0% by mass with respect to the entire component (A) included in the resin composition, preferably 5% by mass or more, more preferably 10% by mass or more, even more preferably 15% by mass or more, and yet more preferably 20% by mass or more.

In addition, from the viewpoint of improving the mechanical strength of the resin molded body, the content of the novolac-type phenol resin is 100% by mass or less with respect to the entire component (A) included in the resin composition, preferably 50% by mass or less, more preferably 40% by mass or less, even more preferably 35% by mass or less, yet more preferably 30% by mass or less, and still more preferably 20% by mass or less.

### (Epoxy Resin)

Epoxy resins are general monomers, oligomers, and polymers having two or more epoxy groups in one molecule, and the molecular weight and molecular structure thereof are not limited.

Examples of epoxy resins include bifunctional or crystalline epoxy resins such as biphenyl-type epoxy resin, bisphenol A-type epoxy resin, bisphenol F-type epoxy resin, stilbene-type epoxy resin, and hydroquinone-type epoxy resin; novolac-type epoxy resins such as cresol novolac-type epoxy resin, phenol novolac-type epoxy resin, and naphthol novolac-type epoxy resins; phenol aralkyl-type epoxy resins such as phenylene skeleton-containing phenol aralkyl-type epoxy resins, biphenylene skeleton-containing phenol aralkyl-type epoxy resins, and phenylene skeleton-containing naphthol aralkyl-type epoxy resins; trifunctional-type epoxy resins such as triphenolmethane-type epoxy resins and alkyl-modified triphenolmethane-type epoxy resins; modified phenol-type epoxy resins such as dicyclopentadiene modified phenol-type epoxy resins and terpene modified phenol-type epoxy resins; heterocycle-containing epoxy resins such as triazine nucleus-containing epoxy resins, and the like.

The epoxy resin preferably includes a novolac-type epoxy resin and more preferably includes a cresol novolac-type epoxy resin.

In addition, the resin composition may also include an epoxy resin and a curing agent. Examples of curing agents include phenol resin curing agents, amine curing agents, acid anhydride curing agents, mercaptan curing agents, and the like. Among the above, phenol resin curing agents are preferable in terms of the balance of flame resistance, moisture resistance, electrical properties, curability, storage stability, and the like. In addition, a combination of curing agents from a plurality of systems may also be used.

Specific examples of phenol resin curing agents include the various phenol resins described above.

From the viewpoint of improving the curing characteristics of the resin composition, the content of the component (A) in the resin composition is preferably 10% by mass or more with respect to the entire resin composition, more preferably 20% by mass or more, and even more preferably 30% by mass or more.

In addition, from the viewpoint of improving the adhesion to the plating film formed on the surface of the resin molded body, the content of the component (A) in the resin composition may be, for example, 99% by mass or less with respect to the entire resin composition, preferably 90% by mass or less, more preferably 80% by mass or less, even more preferably 70% by mass or less, yet more preferably 60% by mass or less, and still more preferably 50% by mass or less.

### (Component (B))

Component (B) is a core-shell-type elastomer particle.

The resin composition including component (B) together with component (A) makes it possible to stably obtain a resin molded body having excellent adhesion to a plating film.

The component (B) is preferably soluble in acid.

In addition, the component (B) is, for example, a graft copolymer having a core-shell structure, more specifically, the component (B) is formed of a rubber-like polymer forming the core and a graft chain forming the shell.

Examples of the material of the core of the component (B) include a rubber-like polymer.

From the viewpoint of improving adhesion to the plating film formed on the surface of the resin molded body, the material of the core preferably includes a butadiene (co)polymer such as polybutadiene (butadiene rubber), styrene-butadiene copolymer (styrene-butadiene rubber: SBR), methyl methacrylate-butadiene-styrene copolymer (MBS), and acrylonitrile-butadiene copolymer (nitrile rubber).

In addition, examples of other materials of the core include polyisoprene (isoprene rubber), polychloroprene (chloroprene rubber), acrylic acid alkyl ester copolymer (acrylic rubber), ethylene-acrylic ester copolymer (ethylene-acrylic rubber), ethylene-propylene copolymer (ethylene-propylene rubber), epichlorohydrin (co)polymer (epichlorohydrin rubber), organosiloxane (co)polymer (silicone rubber), fluororubber, natural rubber, and materials in which hydrogen is added or partially added to the unsaturated bond portions of the above.

In addition, from the viewpoint of improving the adhesion between the resin molded body and the plating film, the material of the core preferably includes one or two or more selected from the group consisting of MBS polymers, SBR polymers, and acrylic polymers.

The material of the shell of the component (B) preferably includes a (co)polymer including a structure derived from one or two or more monomers selected from the group consisting of, for example, aromatic vinyl monomers, (meth)acrylic ester monomers, and vinyl halide monomers.

Examples of aromatic vinyl monomers include styrene, styrene compounds such as halogenated styrenes such as methyl (o-, m-, or p-)styrene, ethylstyrene, isobutylstyrene, tert-butylstyrene, alkoxystyrene, and bromstyrene; and naphthalene compounds such as vinyl naphthalene.

Specific examples of (meth) acrylic acid ester monomers include methacrylate alkyl esters such as methyl methacrylate, ethyl methacrylate, hydroxyethyl methacrylate, propyl methacrylate, butyl methacrylate, cyclohexyl methacrylate, 2-ethylhexyl methacrylate, and octyl methacrylate; and acrylic acid alkyl esters, such as methyl acrylate, ethyl acrylate, propyl acrylate, butyl acrylate, cyclohexyl acrylate, 2-ethylhexyl acrylate, and octyl acrylate.

Specific examples of vinyl halide monomers include chloroethylene.

In addition, from the viewpoint of improving the adhesion between the resin molded body and the plating film, the material of the shell preferably includes one or two or more materials selected from the group consisting of polycarbonate (PC), polybutylene terephthalate (PBT), polyvinyl chloride (PVC), and polymethyl methacrylate (PMMA).

In addition, examples of commercial products of the component (B) include the KaneAce M series (manufactured by Kaneka Corporation), such as KaneAce M711, KaneAce M701, KaneAce M577, and KaneAce M210; the KaneAce B series (manufactured by Kaneka Corporation), such as KaneAce B513; and the Staphyloid series (manufactured by Aica Kogyo Co., Ltd.), including the Staphyloid AC series such as trade name "Staphyloid AC-3832" (alkyl acrylate-alkyl methacrylate copolymer fine particles), trade name "Staphyloid AC-3816N" (alkyl acrylate-alkyl methacrylate copolymer fine particles), and trade name "Staphyloid AC-4030" (alkyl acrylate-alkyl methacrylate copolymer fine particles).

From the viewpoint of improving the adhesion between the resin molded body and the plating film, an average particle diameter d₅₀ of the component (B) is preferably 50 µm or more, more preferably 100 µm or more, and even more preferably 150 µm or more, and preferably 500 µm or less, more preferably 400 µm or less, and even more preferably 300 µm or less.

Here, for the average particle diameter d₅₀ of the component (B), it is possible to measure the particle size distribution of the particles on a volume basis using a commercially available laser diffraction particle size analyzer (for example, SALD-7000 manufactured by Shimadzu Corporation). Here, it is possible to use the obtained median diameter (d₅₀) as the average particle diameter.

From the viewpoint of improving the adhesion between the resin molded body and the plating film, the content of the component (B) in the resin composition is preferably 0.1% by mass or more with respect to the entire resin composition, more preferably 0.5% by mass or more, even more preferably 1% by mass or more, yet more preferably 1.5% by mass or more, and still more preferably 2.5% by mass or more.

In addition, from the viewpoint of improving the strength of the resin molded body, the content of the component (B) in the resin composition is preferably 10% by mass or less with respect to the entire resin composition, more preferably 8% by mass or less, even more preferably 6% by mass or less, and yet more preferably 4% by mass or less.

In the present embodiment, since the resin composition includes the components (A) and (B), it is possible to effectively improve the adhesion between the resin molded body and the plating film when a plating process is applied to the surface of the resin molded body formed of the cured product of the resin composition. For this reason, the resin composition of the present embodiment is suitably used to obtain a resin molded body for which a plating process is applied on a surface.

In the present embodiment, the resin composition may include components other than the components (A) and (B).

### (Filler)

The resin composition may further include, for example, a filler other than the component (B). Here, examples of the shape of the filler other than the component (B) include a fibrous shape or a granular shape, such as a spherical shape.

Specific examples of fibrous shape fillers include glass fiber, carbon fiber, fibrous wollastonite, and rock wool. It is possible to set the average fiber diameter of the fibrous shape filler to be, for example, 10 µm to 15 µm, and the average fiber length to be, for example, 20 µm to 5000 µm. The use of such a fibrous shape filler makes it possible to improve the workability during the manufacturing of the resin composition and also to further improve the mechanical strength of the resin molded body.

In addition, specific examples of granular fillers include spherical shape inorganic fillers, more specifically, spherical glass such as glass beads and glass powder, silica such as spherical silica and crushed silica, kaolin, calcium carbonate, aluminum hydroxide, clay, and mica.

From the viewpoint of improving adhesion to the plating film formed on the surface of the resin molded body as well as improving the mechanical strength of the resin molded body, the resin composition preferably includes an inorganic filler, more preferably includes a fibrous shape inorganic filler, and even more preferably includes glass fibers.

From the viewpoint of improving the mechanical strength of the resin molded body, the content of the glass fiber in the resin composition is preferably 10% by mass or more with respect to the entire resin composition, more preferably 20% by mass or more, even more preferably 30% by mass or more, and yet more preferably 40% by mass or more.

In addition, from the viewpoint of improving the curing characteristics of the resin composition, the content of the filler in the resin composition is preferably 70% by mass or less with respect to the entire resin composition, more preferably 65% by mass or less, and even more preferably 60% by mass or less.

In addition, the resin composition may further include an elastomer other than the component (B). Specific examples of elastomers other than the component (B) include one or two or more selected from the group consisting of butadiene rubber, butadiene acrylonitrile copolymer, and modified polyvinyl alcohols such as alkyl acetalized polyvinyl alcohol.

In addition, the resin composition may also include, for example, various additives used in thermosetting resin molding materials. Specific examples of additives include mold release agents such as stearic acid, calcium stearate, magnesium stearate, carnauba wax, and polyethylene; curing aids such as magnesium oxide and calcium hydroxide (slaked lime); coloring agents such as carbon black; adhesion improvers or coupling agents to improve the adhesion between the filler and the thermosetting resin; and solvents.

The content of each of these components in the resin composition is, for example, approximately 0.1% by mass to 5% by mass with respect to the entire resin composition.

Examples of coupling agents include one or two or more selected from other known coupling agents such as various silane compounds such as epoxysilanes, aminosilanes, phenylaminosilanes, alkylsilanes, ureidosilanes, vinylsilanes, and methacrylic silanes, titanium compounds, aluminum chelates, and aluminum/zirconium compounds.

Next, a description will be given of the physical properties of the resin composition or the cured product thereof.

From the viewpoint of improving the temperature cycling reliability of the molded body obtained by applying a plating process to the surface of the resin molded body, for a cured product obtainable by molding the resin composition at 175°C for 3 minutes and then carrying out curing at 180°C for 8 hours, the linear expansion coefficient in the planar direction (XY direction, MD) in the range of 40°C to 150°C, measured by thermomechanical analysis (TMA) at a temperature rise rate of 5°C/minute, is preferably 5 ppm/°C or higher, more preferably 8 ppm/°C or higher, and even more preferably 10 ppm/°C or higher, and may be, for example, 70 ppm/°C or lower, preferably 30 ppm/°C or lower, more preferably 25 ppm/°C or lower, even more preferably 20 ppm/°C or lower, and yet more preferably 18 ppm/°C or lower.

For the cured product obtainable by molding the resin composition at 175°C for 3 minutes and then carrying out curing at 180°C for 8 hours, the linear expansion coefficient in the thickness direction (Z direction, TD) in the range of 40°C to 150°C, measured by thermomechanical analysis (TMA) at a temperature rise rate of 5°C/min, is preferably 5 ppm/°C or higher, more preferably 10 ppm/°C or higher, even more preferably 15 ppm/°C or higher, yet more preferably 20 ppm/°C or higher, and may be, for example, 70 ppm/°C or lower, preferably 35 ppm/°C or lower, more preferably 30 ppm/°C or lower, and even more preferably 25 ppm/°C or lower, from the viewpoint of improving the temperature cycling reliability of the molded body obtained by applying a plating process to the surface of the resin molded body.

In addition, when the strength when the cured product obtainable by molding the resin composition at 175°C for 3 minutes and then carrying out curing at 180°C for 8 hours is used as a test piece and the test piece is broken by a method in accordance with JIS K 6911 is set as the flexural strength, the flexural strength of the cured product is 140 MPa or more, and preferably 170 MPa or more. With such a flexural strength, it is possible to further increase the adhesion to the plating film and to further improve the mechanical strength of the resin molded body.

In addition, when the strength when the cured product obtainable by molding the resin composition at 175°C for 3 minutes and then carrying out curing at 180°C for 8 hours is used as a test piece and the test piece is broken by a method in accordance with JIS K 6911 is set as the flexural strength, the flexural modulus of the cured product, as determined from the slope of the stress-strain curve in the elastic region, is 10.0 GPa or higher, and preferably 18.0 GPa or higher. With such a flexural modulus, it is possible to further increase the adhesion to the plating film and to further improve the mechanical strength of the resin molded body.

Regarding the method for manufacturing the resin composition, for example, it is possible to obtain the resin composition using a method in which each of the components described above is mixed by a known means, further melt-kneaded in a kneading machine such as a roll, kneader, or extruder, and then ground after cooling. In addition, as necessary, a resin composition in the form of particles may be obtained by tablet molding into tablets after the grinding in the method described above. In addition, after grinding in the method described above, a sheet-like resin composition may be obtained by, for example, vacuum lamination molding or compression molding. In addition, the degree of dispersion, flowability, and the like of the obtained resin composition may be adjusted as appropriate.

Here, from the viewpoint of making the dispersibility of the raw material preferable, when the resin composition includes a filler, the component (B) and the filler are preferably mixed in advance and then the mixture is mixed with the component (A). More specifically, the component (B) and the filler are pre-processed and mixed in a mixer provided with rotating blades such as a Henschel mixer. At this time, more preferably, the component (B), filler, and coupling agent are pre-processed and mixed.

### (Resin Molded Body)

The resin molded body (molded product) is formed of the cured product of the resin composition described above.

In addition, it is possible to obtain the resin molded body by molding the resin composition described above. The molding method is preferably transfer molding or injection molding.

At this time, the conditions depend on the thickness of the resin molded body, for example, in a case of molding a thick-walled molded product of approximately 5 mm by injection molding, it is possible to adopt conditions of a mold temperature of 170°C to 190°C, a molding pressure of 100 MPa to 150 MPa, and a curing time of 30 seconds to 90 seconds.

In addition, it is possible to perform after-baking on the obtained resin molded body as necessary and to select the conditions for after-baking as appropriate for the application. For example, it is possible to set the maximum attainable temperature to from 150°C to 270°C and the holding time to from 1 hour to 15 hours. More preferably, it is possible to set the maximum attainable temperature to from 170°C to 240°C and the holding time to from 1 hour to 10 hours. The higher the temperature at which the after-baking is performed, the smaller the change in heating dimensions in the use environment tends to be.

In addition, from the viewpoint of further improving the adhesion between the resin molded body and the plating film, the resin molded body preferably has a sea-island structure, and the resin molded body more preferably has a sea-island structure in which the component (B) is present in the island phase.

Here, it is possible to confirm the sea-island structure by electron microscopic observation.

### (Molded Body)

The molded body has a cured product of the resin composition described above and a plating layer provided in contact with the surface of the cured product.

FIG. 1 shows a cross-sectional view showing a configuration example of the molded body in an embodiment. A molded body 100 shown in FIG. 1 has a resin molded body 101 formed of a cured product of a resin composition and a plating layer 103 provided in contact with the surface of the resin molded body 101.

In addition, the plating layer 103 may be formed of one layer or may have a plurality of layers, for example, FIG. 1 shows a configuration in which the plating layer 103 includes a first plating layer 105 and a second plating layer 107 from the resin molded body 101 side.

In addition, the plating layer 103 is preferably provided over the entire surface of the resin molded body 101.

The methods for plating the first plating layer 105 and the second plating layer 107 may be the same or different.

From the viewpoint of improving the adhesion between the resin molded body and the plating layer 103, the first plating layer 105 is specifically an electroless plating layer. In addition, the second plating layer 107 may be an electroless plating layer or an electrolytic plating layer.

In addition, the first plating layer 105 and the second plating layer 107 are specifically metal layers, for example, these layers are independently layers including one or two or more selected from the group consisting of Cu, Ni, Al, Fe, Au, and alloys thereof.

From the viewpoint of improving the adhesion between the resin molded body and the plating layer 103, preferably, one of the first plating layer 105 and the second plating layer 107 is a Ni film and the other is a Cu film.

From the viewpoint of improving the adhesion between the resin molded body 101 and the plating layer 103, the resin molded body 101 preferably has a roughened layer on the bonding surface with the plating layer 103 and the plating layer 103 is provided inside a recess provided in the roughened layer.

From the viewpoint of improving adhesion to the plating layer 107 and improving the electromagnetic wave shielding properties, the thickness of the first plating layer 105 is preferably 0.1 µm or more, and more preferably 0.3 µm or more, and preferably 5 µm or less, and more preferably approximately 3 µm.

From the viewpoint of improving the electromagnetic wave shielding properties, the thickness of the second plating layer 107 is preferably 0.5 µm or more, and more preferably 1 µm or more, and preferably 50 µm or less, and more preferably 30 µm or less.

In addition, from the viewpoint of improving the electromagnetic wave shielding properties, the thickness of the entire plating layer 103 is preferably 0.1 µm or more, and more preferably 0.5 µm or more, and preferably 60 µm or less, and more preferably 30 µm or less.

Next, a description will be given of the method for manufacturing the molded body 100. The method for manufacturing a molded body includes, for example, a step of preparing a cured product of the resin composition described above, that is, the resin molded body 101, a step of etching and roughening the surface of the resin molded body 101, and a step of forming the plating layer 103 on the roughened surface.

The step of etching and roughening the surface of the resin molded body 101 is specifically a step in which the surface on which the plating layer 103 is to be formed is etched prior to the plating process to dissolve and remove calcium carbonate present in the vicinity of the surface of the resin molded body 101 and form a roughened layer provided with unevenness on the surface. In addition, when the resin molded body 101 includes an elastomer which dissolves in the etching solution, the elastomer present in the vicinity of the surface of the resin molded body 101 is preferably removed together with the calcium carbonate.

Examples of the etching method include acid processing. Specific examples of acids used in the acid processing include chromic acid, sulfuric acid, and the like. For example, in a case where the acid used is chromic acid only, it is possible to appropriately set the etching conditions according to the type of components such as the thermosetting resin included in the resin molded body 101, for example.

In addition, after the acid processing and before forming the plating layer 103, it is preferable to neutralize the surface of the resin molded body 101 by washing.

In addition, in the step of forming the plating layer 103, the first plating layer 105 and the second plating layer 107 are formed sequentially using a known method according to the type of metal forming the plating film and the plating method. For example, a seed layer is formed on the roughened surface of the resin molded body 101 and the metal film is grown using the seed layer as a base point.

In the present embodiment, since a roughened layer is formed on the resin molded body 101, it is possible to form the first plating layer 105 in which a plating film is filled inside a recess provided in the roughened layer. For this reason, it is possible to obtain a plating layer 103 having excellent adhesion to the resin molded body 101.

Through the above, it is possible to obtain the molded body 100 shown in FIG. 1.

There is no limitation on the applications of the molded body 100 obtained in the present embodiment and development is possible for various applications, for example, use is possible for aircraft parts, automotive parts, parts for electronic devices, parts for household electrical appliances, parts for industrial devices, and the like.

In particular, it is possible to suitably use the molded body 100 for members in which the plating layer 103 functions as a heat diffusing member, members in which the plating layer 103 functions as an electromagnetic wave shield, or the like, for example, use is possible in parts of inverters, parts of air conditioners, and the like.

Description was given of the embodiments of the present invention, but the above are examples of the present invention and it is also possible to adopt various configurations other than the above.

### [Examples]

A detailed description will be given below of the present embodiment with reference to Examples and Comparative Examples. The present embodiment is not limited in any way to the descriptions of these Examples.

### (Examples 1 to 6 and Comparative Examples 1 to 4)

### (Preparation of Resin Composition)

For each of the Examples and each of the Comparative Examples, the resin compositions for sealing were prepared as follows. That is, a granular molding material (thermosetting resin composition) was obtained by kneading a mixture in which each component was blended according to the blending amounts shown in Table 1 with heating rolls having different rotation speeds and then grinding the cooled mixture into a sheet. Here, as the kneading conditions of the heating rolls, the rotation speed was 20 rpm/14 rpm on the high-speed side/low-speed side, the temperature was 90°C/20°C on the high-speed side/low-speed side, and the kneading time was 5 minutes to 10 minutes.

The details of each component in Table 1 are as follows. In addition, the blending ratio of each component shown in Table 1 indicates the blending ratio (% by mass) with respect to the entire resin composition.

(A) Thermosetting resin 1: Resol-type phenol resin, PR-53529 (manufactured by Sumitomo Bakelite Co., Ltd.)
(A) Thermosetting resin 2: Resol-type phenol resin, PR-51723 (manufactured by Sumitomo Bakelite Co., Ltd.)
(A) Thermosetting resin 3: Novolac-type phenol resin, A-1087 (manufactured by Sumitomo Bakelite Co., Ltd.)
(A) Thermosetting resin 4: Novolac-type phenol resin, A-1082G (manufactured by Sumitomo Bakelite Co., Ltd.)
(A) Thermosetting resin 5: Ortho-Cresol-type epoxy resin, Epiclone N-670 (manufactured by DIC)
(A) Thermosetting resin 6: Novolac-type phenol resin, PR-51470 (manufactured by Sumitomo Bakelite Co., Ltd.)

Curing aid 1: Slaked lime, SA074 (manufactured by Chichibu Lime Industry Co., Ltd.)
Curing aid 2: Slaked lime, Ashidachi LS (manufactured by Ashidachi Lime Co., Ltd.)
Curing aid 3: 2-phenyl-4-methylimidazole, 2P4MZ (manufactured by Shikoku Chemicals Corporation)
Filler 1: Glass fibers, CS3E479 (manufactured by Nitto Boseki Co., Ltd.), average fiber diameter 11 µm, average fiber length 3 mm
Filler 2: Kaolin, ECKALITE (manufactured by Imerys)
Filler 3: Crushed silica, RD-8 (manufactured by Tatsumori Ltd.), average particle diameter d₅₀ = 15 µm

(B) Elastomer 1: Core-shell-type, core: MBS polymer, KaneAce M711 (manufactured by Kaneka Corporation), average particle diameter d₅₀ = 200 µm
(B) Elastomer 2: Core-shell-type, core: MBS polymer, KaneAce M701 (manufactured by Kaneka Corporation), average particle diameter d₅₀ = 250 µm
(B) Elastomer 3: Core-shell-type, core: SBR polymer, shell: PVC, KaneAce B513 (manufactured by Kaneka Corporation), average particle diameter d₅₀ = 200 µm
(B) Elastomer 4: Core-shell-type, core: acrylic polymer, shell: PVC, KaneAce M577 (manufactured by Kaneka Corporation), average particle diameter d₅₀ = 250 µm
(B) Elastomer 5: Core-shell-type, core: acrylic polymer, shell: PMMA, KaneAce M210 (manufactured by Kaneka Corporation), average particle diameter d₅₀ = 200 µm
Elastomer 6: Mixture of butadiene acrylonitrile copolymer and calcium carbonate, TR2250 (manufactured by JSR Corporation)
Elastomer 7: Alkyl acetalized polyvinyl alcohol, Esrec BX-5 (manufactured by Sekisui Chemical Co., Ltd.)

Mold release agent 1: Carnauba wax, Carnauba F-2 (manufactured by Dainichi Chemical Industry Co., Ltd.)
Mold release agent 2: Montanoic acid ester wax, Licolub WE-4 (manufactured by Clariant Japan)
Mold release agent 3: Calcium stearate, CA-ST (manufactured by Nitto Chemical Industry Co., Ltd.)
Coloring agent 1: Carbon black, #750B (manufactured by Mitsubishi Chemical Corporation)

The following measurements were performed on the resin compositions obtained in each Example. The results are shown together in Table 1.

### (Method for Measuring Physical Properties of Resin Molded Body)

### (Method for Measuring Linear Expansion Coefficient (CTE))

For the resin compositions obtained in each Example, flexural test pieces were molded at 175°C for 3 minutes and then subjected to a curing process in an oven at 180°C for 8 hours to obtain cured product test pieces. TMA measurements were respectively performed on the obtained test pieces in the flow direction (planar direction or XY direction) and in the thickness direction (Z direction). The TMA measurements were performed at a temperature rise rate of 5°C/min and the average linear expansion coefficient at 40°C to 150°C was used as the CTE.

### (Evaluation Method)

### (Method for Measuring Peel Strength)

For the resin composition obtained in each Example, a molded product of 125 mm square × 1.5 mm thickness was molded under conditions of 175°C for 90 seconds to obtain a resin molded body. After that, chromic acid etching was carried out at 65°C for 20 minutes on the plating film-forming surface of the resin molded body obtained by performing the curing process in an oven at 180°C for 8 hours to roughen the plating film-forming surface. The etching solution was an aqueous solution including chromic anhydride and sulfuric acid in the concentrations below, respectively.

### (Etching Solution)

| Component | Concentration |
|---|---|
| Chromic anhydride | 400 g/L |
| Sulfuric acid | 400 g/L |

After that, a 0.1 µm to 3 µm Ni film was formed on the etched surface of the resin molded body by electroless Ni plating and then a 10 µm to 50 µm Cu film was formed by electrolytic Cu plating. The plating width was set at 10 mm. The composition of the plating solution (aqueous solution) used in each plating step is shown below.

### (Plating Solution for Electroless Ni Plating)

| Component | Concentration |
|---|---|
| Nickel sulfate | 20 g/L |
| Sodium acetate | 5 g/L |
| Sodium hypophosphite | 10 g/L |
| Sodium citrate | 5 g/L |

### (Plating Solution for Electrolytic Cu Plating)

| Component | Concentration |
|---|---|
| Copper sulfate | 200 g/L |
| Sulfuric acid | 50 g/L |

The strength when the plating is peeled off orthogonally from the molded body obtained as described above, that is, the maximum peel strength when a 90° peel test is performed, is set as the peel strength. The method for measuring the strength is as follows.

Measurement method: One end of a copper foil was peeled off to an appropriate length and then attached to a support bracket and the tip of the peeled copper foil was grasped with a gripping tool and continuously peeled off to approximately 50 mm at a speed of approximately 50 mm per minute in the direction where the tensile direction was orthogonal to the surface of the copper foil. The lowest value of the load in this period was set as the peel-off strength [N/cm].

### (Method for Measuring Flexural Strength and Flexural Modulus)

For the resin compositions obtained in each Example, in accordance with JIS K 6911, flexural test pieces were molded under curing conditions of 175°C for 3 minutes and then cured at 180°C for 8 hours to obtain test pieces. The strength of the test piece when broken by a method in accordance with JIS K 6911 was set as the flexural strength. In addition, the flexural modulus was determined from the slope of the stress-strain curve in the elastic region.

**Table 1**

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| | (A) Thermosetting resin 1 | 15.6 | 15.6 | 15.6 | 15.6 | 15.6 | | 15.6 | 14.0 | 16.8 | |
| | (A) Thermosetting resin 2 | 14.6 | 14.6 | 14.6 | 14.6 | 14.6 | | 14.6 | 15.0 | 15.7 | |
| | (A) Thermosetting resin 3 | | | | | | | | 7.0 | | |
| | (A) Thermosetting resin 4 | 7.8 | 7.8 | 7.8 | 7.8 | 7.8 | | 7.8 | | 8.4 | |
| | (A) Thermosetting resin 5 | | | | | | 11.9 | | | | 11.9 |
| | (A) Thermosetting resin 6 | | | | | | 5.8 | | | | 5.8 |
| | Curing aid 1 | 1.1 | 1.1 | 1.1 | 1.1 | 1.1 | | 1.1 | | 1.1 | |
| | Curing aid 2 | | | | | | | | 1.2 | | |
| | Curing aid 3 | | | | | | 0.13 | | | | 0.13 |
| | Filler 1 | 55.1 | 55.1 | 55.1 | 55.1 | 55.1 | 20 | 55.1 | 54.6 | 55.2 | 20 |
| | Filler 2 | | | | | | | | 3.0 | | |
| Blend (% by mass) | Filler 3 | | | | | | 60 | | | | 61.47 |
| | (B) Elastomer 1 Core shell-type | 3.0 | | | | | 1.5 | | | | |
| | (B) Elastomer 2 Core shell-type | | 3.0 | | | | | | | | |
| | (B) Elastomer 3 Core shell-type | | | 3.0 | | | | | | | |
| | (B) Elastomer 4 Core shell-type | | | | 3.0 | | | | | | |
| | (B) Elastomer 5 Core shell-type | | | | | 3.0 | | | | | |
| | Elastomer 6 | | | | | | | 1.5 | 2.0 | | |
| | Elastomer 7 | | | | | | | 1.5 | | | |
| | Mold release agent 1 | 0.6 | 0.6 | 0.6 | 0.6 | 0.6 | 0.3 | 0.6 | 0.2 | 0.6 | 0.3 |
| | Mold release agent 2 | | | | | | 0.2 | | | | 0.2 |
| | Mold release agent 3 | 1.2 | 1.2 | 1.2 | 1.2 | 1.2 | | 1.2 | 2 | 1.2 | |
| | Coloring agent 1 | 1.0 | 1.0 | 1.0 | 1.0 | 1.0 | 0.17 | 1.0 | 1.0 | 1.0 | 0.2 |
| | Total | 100 | 100 | 100 | 100 | 100 | 100 | 100 | 100 | 100 | 100 |
| Peel strength | (N/cm) *Etching 20 minutes | 6.5 | 6.8 | 5.2 | 3.2 | 3.8 | 6.3 | 0.5 | 0.5 | 0.5 | 1.6 |
| Flexural strength | E(180°C 8 hours) (MPa) | 177 | 164 | 160 | 148 | 190 | 16C | 250 | 248 | 202 | 165 |
| Flexural modulus | E(180°C 8 hours) (GPa) | 13.6 | 11.5 | 11.0 | 10.8 | 12.7 | 17.5 | 15.5 | 16.7 | 15.2 | 18.2 |
| CTE TD/MD direction | E(180°C 8 hours) ppm/°C | 22.5/17.3 | 21.6/17.8 | 24.5/17.7 | 24.5/16.1 | 25.7/16.6 | 19/15 | 22.1/11.5 | 24.5/10.6 | 21.3/10.5 | 18/15 |

From Table 1, in the molded bodies obtained by using the resin composition in each Example, the peel strength of the plating film from the resin molded body was higher than that of the Comparative Examples. Accordingly, using the resin compositions in each of the Examples makes it possible to improve the adhesion between the plating film and the resin molded body when the plating film is formed on the surface of the resin molded body.

In addition, the resin compositions obtained in each of the Examples had preferable characteristics in terms of the flexural strength, flexural modulus, and linear expansion coefficient of the cured product.

This application claims priority based on Japanese Application JP 2019-146703 filed on August 8, 2019, the entire disclosure of which is incorporated herein.

### REFERENCE SIGNS LIST

- 100:: Molded body
- 101:: Resin molded body
- 103:: Plating layer
- 105:: First plating layer
- 107:: Second plating layer

## Claims

1. A thermosetting resin composition used in a resin molded body for which a plating process is applied to a surface, the thermosetting resin composition comprising the following components (A) and (B):
(A) a thermosetting resin; and
(B) core-shell-type elastomer particles.

2. The thermosetting resin composition according to claim 1,
wherein a core of the component (B) includes a butadiene (co)polymer.

3. The thermosetting resin composition according to claim 1 or 2,
wherein a content of the component (B) in the thermosetting resin composition is 0.1% by mass or more and 10% by mass or less with respect to an entire thermosetting resin composition.

4. The thermosetting resin composition according to any one of claims 1 to 3,
wherein the component (A) includes a resol-type phenol resin and a novolac-type phenol resin.

5. The thermosetting resin composition according to any one of claims 1 to 4, further comprising a glass fiber.

6. The thermosetting resin composition according to claim 5,
wherein a content of the glass fiber in the thermosetting resin composition is 10% by mass or more and 70% by mass or less with respect to an entire thermosetting resin composition.

7. The thermosetting resin composition according to any one of claims 1 to 6,
wherein the resin molded body has a sea-island structure and the component (B) is present in an island phase.

8. The thermosetting resin composition according to any one of claims 1 to 7,
wherein, for a cured product obtainable by curing the thermosetting resin composition at 180°C for 8 hours after molding at 175°C for 3 minutes, a linear expansion coefficient in a planar direction in a range of 40°C to 150°C, measured by thermomechanical analysis at a temperature rise rate of 5°C/min, is 5 ppm/°C or higher and 25 ppm/°C or lower.

9. The thermosetting resin composition according to any one of claims 1 to 8,
wherein a flexural strength of a cured product obtainable by curing the thermosetting resin composition at 180°C for 8 hours after molding at 175°C for 3 minutes is 140 MPa or more.

10. The thermosetting resin composition according to any one of claims 1 to 9,
wherein a flexural modulus of a cured product obtainable by curing the thermosetting resin composition at 180°C for 8 hours after molding at 175°C for 3 minutes is 10.0 GPa or more.

11. A molded body comprising:
a cured product of the thermosetting resin composition according to any one of claims 1 to 10; and
a plating layer provided in contact with a surface of the cured product.

12. The molded body according to claim 11,
wherein the cured product has a roughened layer on a bonding surface with the plating layer, and the plating layer is provided inside a recess provided in the roughened layer.

13. The molded body according to claim 11 or 12,
wherein the plating layer is a layer including one or two or more selected from the group consisting of Cu, Ni, Al, Fe, Au, and an alloy thereof.

14. The molded body according to any one of claims 11 to 13,
wherein a thickness of the plating layer is 0.1 µm or more and 60 µm or less.
